# EUROPÄISCHE PATENTSCHRIFT

(11) **EP 0 567 768 B1**
(45) Veröffentlichungstag und Bekanntmachung des Hinweises auf die Patenterteilung: **17.05.1995**
(21) Anmeldenummer: 93104618.9
(22) Anmeldetag: 20.03.1993
(51) Int. Cl.: B25H 1/00

(54) **Einspannvorrichtung für einen Werkstückmanipulator**
Clamping device for a workpiece manipulator
Dispositif de fixation pour un manipulateur de pièces à usiner

(30) Priorität: 31.03.1992 US 860955
(43) Veröffentlichungstag der Anmeldung: 03.11.1993
(73) Patentinhaber: DEERE & COMPANY, Moline, Illinois 61265 (US)
(72) Erfinder: Koltookian, Sarkis Aram, Cedar Falls, Iowa 50613 (US)
(74) Vertreter: Feldmann, Bernhard

(56) Entgegenhaltungen:
- DD-A- 271 869
- FR-A- 2 210 924

## Beschreibung

Die Erfindung bezieht sich auf eine Einspannvorrichtung für einen Werkstückmanipulator mit einem um eine erste Achse drehbaren ersten Rahmen und einem zweiten Rahmen, der an dem ersten Rahmen um eine zweite Achse verschwenkbar angeschlossen ist, die zu der ersten Achse senkrecht verläuft.

Solche Einspannvorrichtungen können an Industrierobotern Verwendung finden und sind den jeweiligen Aufgabenstellungen anpassbar, indem sie verschiedenste Freiheitsgrade der Bewegung für die Handhabung eines Werkstückes zulassen.

Die Einspannvorrichtung, von der die Erfindung ausgeht (DD-A1-271 869), ist an einer Werkstücktransporteinrichtung vorgesehen und dient dazu, Werkstücke zur mehr- oder allseitiger Bearbeitung in einer geradlinigen automatischen Transferstraße zu transportieren. Entsprechend der durchzuführenden Arbeitsgänge kann das Werkstück horizontal und vertikal geschwenkt werden. Wie in den einzelnen Schwenkstellungen die Einspannvorrichtung festgestellt wird, ist in diesem Dokument nicht offenbart.

Die mit der Erfindung zu lösende Aufgabe wird darin gesehen, die Einspannvorrichtung in ihren verschiedenen Stellen mit einfachen Mitteln festzusetzen.

Diese Aufgabe wird zunächst zum Festsetzen gegen Drehen dadurch gelöst, daß der erste Rahmen mit einem Schaftstab fest verbunden ist, der um die erste Achse drehbar ist, einen kegelstumpfartigen Abschnitt aufweist und eine mit Bezug auf die erste Achse drehfeste Bremsplatte mit einer Öffnung aufnimmt, die den kegelstumpfartigen Abschnitt aufnehmen kann und auf diesen aufschiebbar ist, und zum anderen zum Festsetzen gegen Schwenken nach einem anderen Aspekt der Erfindung dadurch, daß der erste Rahmen mit einem Schaftstab fest verbunden ist und der Schaftstab oder der erste Rahmen mit einer schwenkbaren Rastklinke versehen ist, die in Rasterstellen an einem mit dem zweiten Rahmen fest verbundenen Nockenteil lösbar eingreifen kann. Auf diese Weise ist eine einfache Bremse geschaffen, mit der die Einspannvorrichtung gegen Drehen festgesetzt werden kann, die aus wenigen Teilen besteht, damit Gewicht sparend und kostengünstig herzustellen ist, und die gegebenenfalls von Hand betätigbar ist, was ebenfalls zu der Kosten- und Gewichteinsparung beiträgt. Gleichfalls läßt sich der zweite Rahmen gegenüber dem ersten Rahmen mit besonders einfachen Mitteln festsetzen. Im Einzelnen wird die Einspannvorrichtung durch den Schaftstab geprägt, der eine Bremswirkung durch Verklemmen der Bremsplatte mit seinem kegelstumpfartigen Abschnitt erlaubt, die ebenso leicht wieder aufhebbar ist. Gleichzeitig ermöglicht der Schaftstab den erforderlichen Freiraum für die Mittel, mit denen der zweite Rahmen, mit dem das zu handhabende Werkstück erfaßt wird, gegenüber dem ersten Rahmen feststellbar ist, was ebenfalls von Hand erfolgen kann.

Ein einfaches Verspannen mit dem Schaftstab läßt sich dadurch erreichen, daß die Öffnung in der Bremsplatte kegelstumpfartig ausgebildet ist.

Nach einem weiteren Vorschlag der Erfindung ist vorgesehen, daß der Schaftstab unterhalb seines kegelstumpfartigen Abschnittes mit einem Gewindeabschnitt zur Aufnahme eines auf dem Schaftstab höhenverstellbaren Bremskragens versehen ist, der gegen die Bremsplatte zur Anlage bringbar ist. Somit braucht der Bremskragen auf dem Schaftstab lediglich verdreht zu werden, wobei er zum Anlegen der Bremse die Bremsplatte nach oben schiebt, die dann den Schaftstab reibschlüssig erfaßt und gegen Drehen festhält. Zum leichten manuellen Drehen des Bremskragens kann dieser noch mit Handspeichen versehen sein.

Zweckmäßig kann zwischen der höhenverstellbaren Bremsplatte und dem Bremskragen ein Abstandshalter in Form eines hohlen Zylinderteiles vorgesehen sein, dessen Innendurchmesser so bemessen ist, daß er zumindest den unteren Teil des kegelstumpfartigen Abschnittes des Schaftstabes aufnehmen kann.

Im Einzelnen kann die Rastklinke an einem mit dem Stabschaft verbundenen L-förmig ausgebildeten Arretierrahmen um eine Achse schwenkbar angeschlossen sein, die parallel zu der zweiten Achse verläuft, wobei die Rasterstellen auf einer kreisförmig gebogenen Oberfläche des Nockenteils vorgesehen sind, deren Mittelpunkt auf der zweiten Achse liegt. Damit kann die Rastklinke beim Verschwenken des zweiten Rahmens leicht auf dem Nockenteil gleiten. Was die einfachen Mittel anbelangt, so kann die Rastklinke an dem einen Ende eines Arretierarmes vorgesehen sein, der anderenends an dem einen Schenkel des Arretierrahmens um einen Zapfen schwenkbar angeschlossen ist, wobei zwischen dem anderen Schenkel des Arretierrahmens und dem Arretierarm eine Feder gespannt ist. Damit wird die Rastklinke durch die Feder in eine entsprechende Rasterstelle gedrückt, wobei die Feder zumindest mit dazu beiträgt, daß die Rastklinke in der zugehörigen Rasterstelle gehalten wird.

Schließlich wird nach der Erfindung noch vorgeschlagen, daß der erste Rahmen und der Arretierrahmen an dem dem kegelstumpfartigen Abschnitt abgelegenen Ende des Schaftstabes fest angeordnet sind, der erste und der zweite Rahmen U-förmig mit einem oberen Stegteil ausgebildet sind und daß die beiden Stegteile zueinander Abstand aufweisen und in diesem Bereich die Rastklinke und der Nockenteil mit einer Rasterstelle angeordnet sind. Auf diese Weise ergibt sich eine besonders wenig Raum beanspruchende, leichtgewichtige Einspannvorrichtung.

In der Zeichnung ist ein Ausführungsbeispiel mit den beiden Aspekten der Erfindung dargestellt. Es zeigt:
- Fig. 1: eine Einspannvorrichtung für einen Werkstückmanipulator in Seitenansicht und
- Fig. 2: die Einspannvorrichtung nach Fig. 1 in Blickrichtung der Linie 2 : 2 in Fig. 1.

In der Zeichnung ist mit 10 eine Einspannvorrichtung bezeichnet, die eine Platte 12 aufweist, die an das Ende eines Armes 14 eines in der Zeichnung nicht weiter dargestellten Werkstückmanipulators fest angeordnet, beispielsweise angeschweißt ist. Eine Befestigungsplatte 16 ist an die Platte 12 angeschraubt und mit einer zentralen Gewindebohrung 18 und mehreren Gewindebohrungen 20, die um die zentrale Gewindebohrung 18 herum angeordnet sind, versehen.

An die Befestigungsplatte 16 ist ein Schaftstab oder eine Welle 22, die eine in ihrer Längsachse verlaufende Zentralbohrung 24 aufweist, über eine Schraube 26, die sich durch die Zentralbohrung 24 erstreckt und deren Ende in die zentrale Gewindebohrung 18 eingeschraubt ist, drehbar angeschlossen. Eine durch die Längsmittelachse der Welle 22 verlaufende Achse A bildet eine erste Achse, um die die Einspannvorrichtung drehen kann. Die Welle 22 ist außerdem an ihrem oberen Ende mit einem kegelstumpfartigen Abschnitt 28 und daran anschließend mit einem zylindrischen Gewindeabschnitt 30 versehen. An dem der Befestigungsplatte 16 abgelegenen Ende der Welle 22 sind noch zwei Gewindebohrungen 32 vorgesehen.

Die Welle 22 ist mit einer Bremseinrichtung 40 ausgerüstet, die koaxial zu ihr angeordnet ist und eine Bremsplatte 42 aufweist. Letztere hat eine kegelstumpfartige Öffnung 44, die den kegelstumpfartigen Abschnitt 28 der Welle 22 aufnimmt und mit diesem verklemmbar ist. Hierzu ist die Bremsplatte 42 an die Befestigungsplatte 16 über Schaftschrauben 46 in Richtung der ersten Achse verschiebbar angeschlossen. Für die Schiebebewegung ist ein Bremskragen 48 mit einer eine Gewindeöffnung aufweisenden Nabe 50 vorgesehen, die auf den zylindrischen Gewindeabschnitt 30 der Welle 22 aufdrehbar ist. Zum Ausführen der Drehbewegung dienen mehrere Speichen 52, die sich von der Nabe 50 aus gesehen radial nach außen erstrecken. Außerdem erstreckt sich von der Nabe 50 aus noch ein Zylinderteil 54 nach oben, der die Welle 22 umgibt und dessen oberes Ende gegen die Unterseite der Bremsplatte 42 im Einsatz anliegt. Der Bremskragen 48 kann damit von Hand gedreht werden, wobei er sich auf dem zylindrischen Gewindeabschnitt 30 der Welle 22 je nach der Drehrichtung nach oben oder unten verstellt und die Bremsplatte 42 mit dem kegelstumpfartigen Abschnitt 28 der Welle 22 verklemmt bzw. gegen Drehen festsetzt oder diese Festsetzung wieder freigibt. Auf diese Weise kann die Welle 22 durch Reibschluß in jeder beliebigen Drehstellung lösbar festgesetzt werden.

An das Ende der Welle 22 sind ein in den Ansprüchen als erster Rahmen bezeichneter Lastrahmen 60 und ein Arretierrahmen 62 fest angeschlossen, vorzugsweise über die bereits erwähnten beiden Schrauben 32. Außerdem sind der Lastrahmen 60 und der Arretierrahmen 62 noch mit entsprechenden Bohrungen versehen, durch die die Schraube 26 gesteckt werden kann. In jedem Fall ist die Befestigung derart, daß der Lastrahmen 60 und der Arretierrahmen 62 zusammen mit der Welle 22 um die Achse A frei drehen können, wenn die Bremse 40 gelöst ist. Der Lastrahmen 60 ist im wesentlichen U-förmig ausgebildet und mit einem an das Ende der Welle 22 fest angeschlossenen Stegteil 64 versehen, an dessen Enden sich je ein Lastarm 66, 68 nach unten erstreckt.

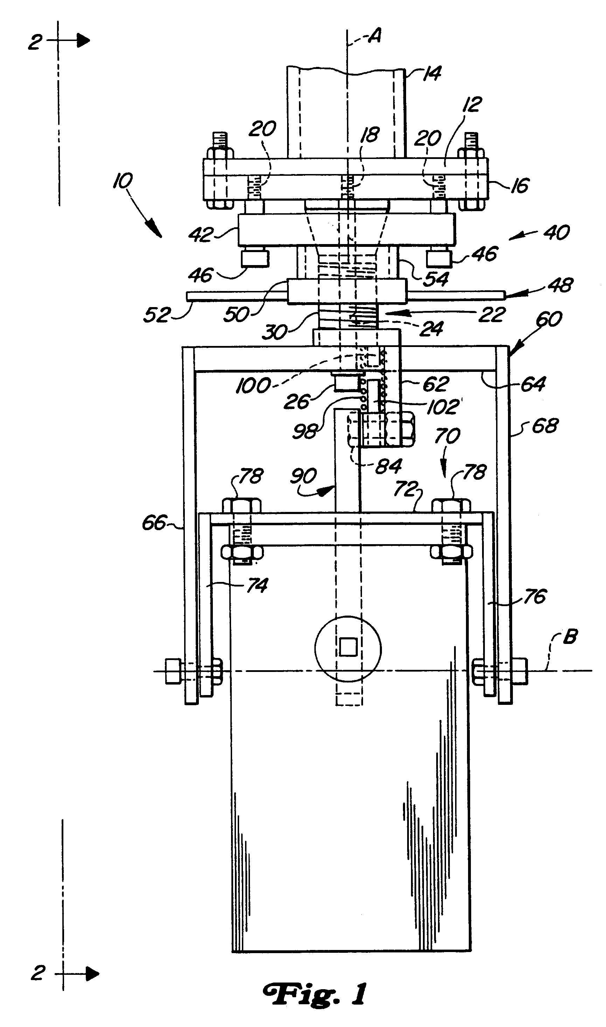

An den Lastrahmen 60 ist ein in den Ansprüchen als zweiter Rahmen bezeichneter U-förmiger Nutzlastrahmen 70 schwenkbar angeschlossen, der einen als Tragkonsole 72 ausgebildete Stegteil und zwei Nutzlastarme 74, 76 aufweist, die an den sich gegenüberliegenden Seiten der Tragkonsole 72 angeschlossen sind. In der in Fig. 1 dargestellten Stellung verlaufen die Lastarme 66, 68 des Lastrahmens 60 zu den Nutzlastarmen 74, 76 des Nutzlastrahmens 70 parallel. Der Lastrahmen 60 übergreift den Nutzlastrahmen 70 derart, daß die Enden der Lastarme 66, 68 und die der Nutzlastarme 74, 76 schwenkbar miteinander verbunden werden können, so daß der Nutzlastrahmen 70 gegenüber dem Lastrahmen 60 um eine zweite horizontale Achse B verschwenkbar ist, die damit rechtwinklig zu der Achse A der Welle 22 verläuft. Das von der Einspannvorrichtung 10 aufzunehmende Werkstück oder die Nutzlast kann an dem Nutzlastrahmen 70 über Schrauben 78 befestigt werden.

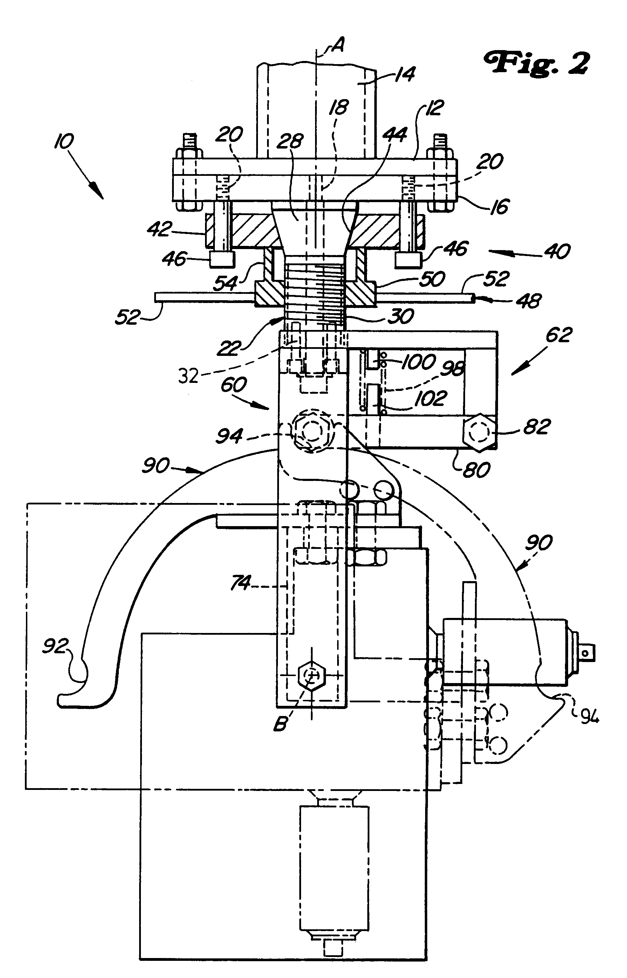

Der Arretierrahmen 62 ist im wesentlichen L-förmig ausgebildet, wobei der lange Schenkel an der Welle 22 angreift und der kurze Schenkel nach unten zeigt. An das Ende des kurzen Schenkels des Arretierrahmens 62 ist ein Arretierarm 80 über einen Zapfen 82 vertikal verschwenkbar angeschlossen, wobei das freie Ende des Arretierarms 80 noch mit einer Rastklinke 84 versehen ist. Die Rastklinke 84 wirkt mit einem gebogenen Nockenteil 90 zusammen, der mit seinem einen Ende an die Tragkonsole 72 des Nutzlastrahmens 70 fest angeschlossen ist. Von der Anschlußstelle an der Tragkonsole 72 aus erstreckt sich der Nockenteil 90 auf einem Kreisbogenabschnitt um die Achse B und ist auf seiner Oberseite mit beliebig vielen Rasterstellen 92, 94 versehen, in die die Rastklinke 84 unter Federwirkung einrasten kann. Hierzu ist eine Feder 98 auf Federführungen 100, 102 in Form von Stiften vorgesehen, von denen ein Stift auf dem Arretierarm 80 aufsitzt und der andere Stift mit dem langen Schenkel des Arretierrahmens 62 verbunden ist. Die Feder 98 drückt damit den Arretierarm 80 nach unten gegen den Nockenteil 90, so daß beim Einrasten der Rastklinke 84 in eine der Rasterstellen 92, 94 der Nutzlastrahmen 70 mit dem Werkstück in verschiedenen Kippstellungen gehalten werden kann. Zwei dieser Stellungen sind in Fig. 2 erkennbar, und zwar einmal in ausgezogenen Linien und einmal in unterbrochenen Linien. Die Tragkonsole 72 des Nutzlastrahmens 70 weist zu dem Stegteil 64 des Lastrahmens 60 einen derartigen Abstand auf, daß der Nockenteil 90 und der Arretierarm 80 mit seinem die Rastklinke 84 aufweisenden Ende in diesem Bereich angeordnet sein können.

Aus der Zeichnung ist ersichtlich, daß die zweite Achse B und die Verlängerung der ersten Achse A durch das Werkstück verlaufen, so daß das Werkstück nahe seines Schwerpunktes gehalten werden kann. Hierdurch läßt sich das Werkstück in seinen verschiedenen Richtungen leicht verstellen und die Lagerstellen können relativ klein ausgebildet werden. Die kegelstumpfartig ausgebildete Bremse an der vertikalen Welle verringert die Größe und das Gewicht der Einspannvorrichtung.

Im Ganzen gesehen ist eine relativ leichte, einfache und kostengünstig herstellbare Einspannvorrichtung für einen Werkstückmanipulator zum Tragen, Halten, Drehen oder Verkippen von Werkstücken geschaffen. Die Gewichtsreduzierung ist bedeutend und der einfache Aufbau erlaubt es, die Einspannvorrichtung den unterschiedlichen Größen und Formen der zu handhabenden Werkstücke anzupassen.

## Patentansprüche

1. Einspannvorrichtung (10) für einen Werkstückmanipulator mit einem um eine erste Achse (A) drehbaren ersten Rahmen (60) und einem zweiten Rahmen (70), der an dem ersten Rahmen (60) um eine zweite Achse (B) verschwenkbar angeschlossen ist, die zu der ersten Achse (A) senkrecht verläuft, dadurch gekennzeichnet, daß der erste Rahmen (60) mit einem Schaftstab (22) fest verbunden ist, der um die erste Achse (A) drehbar ist, einen kegelstumpfartigen Abschnitt (28) aufweist und eine mit Bezug auf die erste Achse drehfeste Bremsplatte (42) mit einer Öffnung (44) aufnimmt, die den kegelstumpfartigen Abschnitt (28) aufnehmen kann und auf diesen aufschiebbar ist.

2. Einspannvorrichtung (10) für einen Werkstückmanipulator mit einem um eine erste Achse (A) drehbaren ersten Rahmen (60) und einem zweiten Rahmen (70), der an dem ersten Rahmen (60) um eine zweite Achse (B) verschwenkbar angeschlossen ist, die zu der ersten Achse (A) senkrecht verläuft, dadurch gekennzeichnet, daß der erste Rahmen (60) mit einem Schaftstab (22) fest verbunden ist und der Schaftstab (22) oder der erste Rahmen (60) mit einer schwenkbaren Rastklinke (84) versehen ist, die in Rasterstellen (92, 94) an einem mit dem zweiten Rahmen (70) fest verbundenen Nockenteil (90) lösbar eingreifen kann.

3. Einspannvorrichtung nach Anspruch 1, dadurch gekennzeichnet, daß die Öffnung (44) in der Bremsplatte (42) kegelstumpfartig ausgebildet ist.

4. Einspannvorrichtung nach Anspruch 1, dadurch gekennzeichnet, daß der Schaftstab (22) unterhalb seines kegelstumpfartigen Abschnittes (28) mit einem Gewindeabschnitt (30) zur Aufnahme eines auf dem Schaftstab (22) höhenverstellbaren Bremskragens (48) versehen ist, der gegen die Bremsplatte (42) zur Anlage bringbar ist.

5. Einspannvorrichtung nach Anspruch 4, dadurch gekennzeichnet, daß die Bremsplatte (42) höhenverstellbar und zwischen Bremsplatte (42) und Bremskragen (48) ein Abstandshalter (Zylinderteil 54) vorgesehen ist.

6. Einspannvorrichtung nach Anspruch 2, dadurch gekennzeichnet, daß die Rastklinke (84) an einem mit dem Stabschaft (22) verbundenen L-förmig ausgebildeten Arretierrahmen (62) um eine Achse (Zapfen 82) schwenkbar angeschlossen ist, die parallel zu der zweiten Achse (B) verläuft.

7. Einspannvorrichtung nach Anspruch 2, dadurch gekennzeichnet, daß die Rasterstellen (92, 94) auf einer kreisförmig gebogenen Oberfläche des Nockenteils (90) vorgesehen sind, deren Mittelpunkt auf der zweiten Achse (B) liegt.

8. Einspannvorrichtung nach Anspruch 6, dadurch gekennzeichnet, daß die Rastklinke (84) an dem einen Ende eines Arretierarmes (80) vorgesehen ist, der anderenends an dem einen Schenkel des Arretierrahmens (62) um einen Zapfen (82) schwenkbar angeschlossen ist, wobei zwischen dem anderen Schenkel des Arretierrahmens (62) und dem Arretierarm (80) eine Feder (98) gespannt ist.

9. Einspannvorrichtung nach einem oder mehreren der vorherigen Ansprüche, dadurch gekennzeichnet, daß der erste Rahmen (60) und der Arretierrahmen (62) an dem dem kegelstumpfartigen Abschnitt (28) abgelegenen Ende des Schaftstabes (22) fest angeordnet sind, der erste und der zweite Rahmen (60, 70) U-förmig mit einem oberen Stegteil (64, 72) ausgebildet sind und daß die beiden Stegteile (64, 72) zueinander Abstand aufweisen und in diesem Bereich die Rastklinke (84) und der Nockenteil (90) mit einer Rasterstelle (92 oder 94) angeordnet sind.

## Claims

1. Gripping unit (10) for a part manipulator with a first frame (60), which may be rotated around a first axis (A), and a second frame (70), which is coupled to the first frame (60) to pivot around a second axis (B) running perpendicular to the first axis (A), characterised in that said first frame (60) is fixed to a shaft (22), which may be rotated around said first axis (A), has a truncated cone shaped portion (28) and receives a brake plate (42) rotationally fixed in relation to said first axis with an aperture (44), which may receive said truncated cone shaped portion (28) and may slide onto it.

2. Gripping unit (10) for a part manipulator with a first frame (60), which may be rotated around a first axis (A), and a second frame (70), which is coupled to the first frame (60) to pivot around a second axis (B) running perpendicular to the first axis (A), characterised in that said first frame (60) is fixed to a shaft (22), and the shaft (22) or said first frame (60) is provided with a pivotal detent member (84), which can releasably engage in detent notches (92, 94) on a cam member (90) fixed to said second frame (70).

3. Gripping unit according to Claim 1, characterised in that the aperture (44) is constructed in the brake plate (42) in the form of a truncated cone.

4. Gripping unit according to Claim 1, characterised in that underneath its truncated cone shaped portion (28), the shaft (22) is provided with a threaded portion (30) to receive a brake collar (48), which may be adjusted in height on said shaft (22) and may be brought into abutment against the brake plate (42).

5. Gripping unit according to Claim 4, characterised in that the brake plate (42) may be adjusted in height and a spacer member (cylindrical part 54) is provided between the brake plate (42) and the brake collar (48).

6. Gripping unit according to Claim 2, characterised in that the detent member (84) is coupled to an L-shaped detent frame (62) connected to the shaft (22) to pivot around an axis (pivot pin 82) running parallel to the second axis (B).

7. Gripping unit according to Claim 2, characterised in that the detent notches (92, 94) are provided on a circular curved surface of the cam member (90), the central point of which lies on the second axis (B).

8. Gripping unit according to Claim 6, characterised in that the detent member (84) is provided at one end of a detent arm (80), which is coupled at the other end to one leg of the detent frame (62) to pivot around a pin (82), and a spring (98) is biased between the other leg of the detent frame (62) and the detent arm (80).

9. Gripping unit according to one or several of the preceding claims, characterised in that the first frame (60) and the detent frame (62) are fixed on the end of the shaft (22) remote from the truncated cone shaped portion (28), and the first and second frames (60, 70) form a U shape with an upper web portion (64, 72); and that the two web portions (64, 72) are spaced from one another and in this region the detent member (84) and the cam member (90) are provided with a detent notch (92 or 94).

## Revendications

1. Dispositif de serrage (10) pour un manipulateur de pièces à usiner, comportant un premier cadre (60) pouvant tourner autour d'un premier axe (A), et un second cadre (70), qui est raccordé au premier cadre (60) de manière à pouvoir basculer autour d'un second axe (B), qui est perpendiculaire au premier axe (A), caractérisé en ce que le premier cadre (60) est relié de façon fixe à une tige formant arbre (22), qui peut tourner autour du premier axe (A), possède une section de forme tronconique (28) et supporte un plateau de frein (42), qui est bloqué en rotation par rapport au premier axe et comporte une ouverture (44) qui peut supporter la section de forme tronconique (28) et peut être emmanchée sur cette dernière.

2. Dispositif de serrage (10) pour un manipulateur de pièces à usiner, comportant un premier cadre (60) pouvant tourner autour d'un premier axe (A), et un second cadre (70), qui est raccordé au premier cadre (60) de manière à pouvoir basculer autour d'un second axe (B), qui est perpendiculaire au premier axe (A), caractérisé en ce que le premier cadre (60) est relié de façon fixe à une tige formant arbre (22) et que la tige formant arbre (22) ou le premier cadre (60) est équipé d'un cliquet d'encliquetage basculant (84), qui peut s'engager de façon amovible dans des parties formant encoches (92,94) présentes sur un élément de came (90) relié de façon fixe au second cadre (70).

3. Dispositif de serrage selon la revendication 1, caractérisé en ce que l'ouverture (44) ménagée dans le plateau de frein (42) est agencée avec une forme tronconique.

4. Dispositif de serrage selon la revendication 1, caractérisé en ce que la tige formant arbre (22) comporte, au-dessous de sa partie de forme tronconique (28), une section filetée (30) servant à recevoir un collet de frein (48) qui est réglable en hauteur sur la tige formant arbre (22) et qui peut être appliqué contre le plateau de frein (42).

5. Dispositif de serrage selon la revendication 4, caractérisé en ce que le plateau de frein (42) est réglable en hauteur et qu'une entretoise (élément cylindrique 54) est prévue entre le plateau de frein (42) et le collet de frein (48).

6. Dispositif de serrage selon la revendication 2, caractérisé en ce que le cliquet d'encliquetage (84) est raccordé à un cadre de blocage (62), qui est réalisé en forme de L et est relié à la tige formant arbre (22), de manière à pouvoir basculer autour d'un axe (téton 82), qui est parallèle au second axe (B).

7. Dispositif de serrage selon la revendication 2, caractérisé en ce que les parties formant encoches (92,94) sont prévues sur une surface, cintrée avec une forme circulaire, de l'élément de came (90), dont le centre est situé sur le second axe (B).

8. Dispositif de serrage selon la revendication 6, caractérisé en ce que le cliquet d'encliquetage (84) est prévu sur une extrémité d'un bras de blocage (80), qui est raccordé, par son autre extrémité, à une branche du cadre de blocage (62) de manière à pouvoir basculer autour d'un téton (82), un ressort (98) étant bandé entre l'autre branche du cadre de blocage (62) et le bras de blocage (80).

9. Dispositif de serrage selon une ou plusieurs des revendications précédentes, caractérisé en ce que le premier cadre (60) et le cadre de blocage (62) sont montés fixes sur l'extrémité de la tige formant arbre (22), qui est située à l'opposé de la section de forme tronconique (28), que les premier et second cadres (60,70) sont réalisés en forme de U avec un élément supérieur en forme de barrette (64,72), et que les deux éléments en forme de barrettes (64,72) sont séparés par une distance réciproque et que le cliquet d'encliquetage (84) et la partie formant came (90) comportant une partie formant encoche (92 ou 94) sont disposés dans cette zone.
